# EUROPEAN PATENT APPLICATION

(11) **EP 4 768 840 A1**
(43) Date of publication of application: **01.07.2026**
(21) Application number: 25201467.5
(22) Date of filing: 10.09.2025
(51) Int. Cl.: F28F 3/12, F28F 9/02, H01M 10/613, H01M 10/625, H01M 10/6556, H01M 10/6567, H01M 10/6568, H01M 50/209, F28D 1/03

(54) **BATTERY THERMAL MANAGEMENT SYSTEM STRUCTURE AND BATTERY PACK**

(30) Priority: 30.12.2024 CN 202423304500 U; 24.03.2025 WO PCT/CN2025/084345
(71) Applicant: Eve Energy Co., Ltd., Huizhou, Guangdong 516006 (CN)
(72) Inventor: ZHAO, Yuhang, Huizhou, 516006 (CN); SHI, Lin, Huizhou, 516006 (CN); WANG, Yuanyuan, Huizhou, 516006 (CN); LI, Helin, Huizhou, 516006 (CN)
(74) Representative: HGF

(57) **Abstract**

Provided are a battery thermal management system structure and a battery pack, which relate to the technical field of battery devices. The battery thermal management system structure includes a direct cooling plate (110) and a temperature control assembly. A liquid cooling flow channel (400) is disposed in the direct cooling plate (110), and a liquid inlet (410) and a liquid outlet (420) are connected to the liquid cooling flow channel (400). The temperature control assembly includes a controller (240), a temperature sensor (210), a flow regulating valve (230) and a heating film (220). The flow regulating valve (230) is disposed at the liquid inlet (410), the flow regulating valve (230) is connected to the liquid cooling flow channel (400), and the heating film (220) is disposed between the direct cooling plate (110) and the cells (310).

## Description

### TECHNICAL FIELD

The present application relates to the technical field of battery devices, for example, a battery thermal management system structure and a battery pack.

### BACKGROUND

With the rapid development of new energy vehicles such as electric vehicles, users of pure electric vehicles have increasingly higher requirements for a cruising range and a charging rate, resulting in increasingly larger energy of cells and an increasingly larger amount of heat generated by the cells during operation. Moreover, as the number of cells and the charging rate increase, temperature consistency is more difficult to control. Moreover, in a low-temperature environment, batteries need to be heated to ensure the normal operation of the batteries and provide sufficient drive forces for devices such as the vehicle.

A traditional battery thermal management system has problems such as non-uniform heat dissipation or heating, low efficiency, a complex structure and difficulty in controlling a temperature difference of the entire pack of cells, which cannot effectively achieve thermal management treatment of cells and is not conducive to ensuring the normal operation of the cells. Moreover, the cells have low safety during the operation.

### SUMMARY

The present application provides a battery thermal management system structure and a battery pack that have simple structures and can accurately control a temperature of a vicinity of cells to be maintained within a suitable operation range, thereby ensuring the operation performance of the cells and improving the service lives of the cells.

In an aspect, the present application provides a battery thermal management system structure. The battery thermal management system structure includes a direct cooling plate and a temperature control assembly. A top surface of the direct cooling plate is configured to be connected to bottom surfaces of cells, a liquid cooling flow channel is disposed in the direct cooling plate, a liquid inlet and a liquid outlet are connected to the liquid cooling flow channel, the liquid inlet and the liquid outlet are disposed on the direct cooling plate and disposed on the same side of the direct cooling plate.

The temperature control assembly includes a controller, a temperature sensor, a flow regulating valve and a heating film. The controller is separately connected to the temperature sensor, the flow regulating valve and the heating film via signals, the temperature sensor is configured to be disposed on one side of the cells, the flow regulating valve is disposed at the liquid inlet, the flow regulating valve is connected to the liquid cooling flow channel, and the heating film is configured to be disposed between the direct cooling plate and the cells.

In another aspect, the present application further provides a battery pack. The battery pack includes the above battery thermal management system structure and further includes a housing and a battery module. The battery module includes multiple cells disposed side by side. The direct cooling plate is integrally formed with the housing. The housing includes a frame connected to the direct cooling plate. The frame and the direct cooling plate enclose to form a placement cavity. A pressure beam is disposed in the placement cavity and divides the placement cavity into a battery compartment configured for placing the battery module and an electrical compartment configured for placing an electronic element.

In the battery thermal management system structure of the present application, a top surface of a direct cooling plate is connected to bottom surfaces of cells, and a coolant circularly flows in a liquid cooling flow channel via a liquid inlet and a liquid outlet so that the direct cooling plate can quickly cool the cells, thereby effectively reducing a heating degree of the cells during operation and avoiding the performance degradation and even the problem of safety caused by the overheating of the cells. When a temperature control assembly is disposed, a temperature sensor is disposed on one side of the cells to detect a temperature of a vicinity of the cells in real time and feeds a corresponding temperature signal back to a controller, and the controller controls a flow regulating valve to control a flow rate of the coolant or starts a heating film for heating, thereby accurately controlling the temperature of the vicinity of the cells to be maintained within a suitable operation range, ensuring the operation performance of the cells and improving the service lives of the cells. Disposing the liquid inlet and the liquid outlet on the same side of the direct cooling plate is conducive to achieving temperature neutralization during the entry and exit of the coolant, thereby preventing an excessively large temperature difference between cells near the liquid inlet and cells near the liquid outlet from affecting the operation performance of the cells.

### BRIEF DESCRIPTION OF THE DRAWINGS

FIG. 1 is an exploded view of a partial structure of a battery thermal management system structure in some embodiments.
FIG. 2 is a structure diagram of a liquid cooling flow channel in some embodiments.
FIG. 3 is a structure diagram of a branch pipe group in some embodiments.
FIG. 4 is a structure diagram of a liquid outlet pipe in some embodiments.
FIG. 5 is a structure diagram of a battery pack in some embodiments.
FIG. 6 is a structure diagram of a battery pack (a battery module is omitted) in some embodiments.
FIG. 7 is a structure diagram of a gasket in some embodiments.
FIG. 8 is a structure diagram of a housing in some embodiments.
FIG. 9 is an enlarged structure diagram of portion A in FIG. 8.
FIG. 10 is a structure diagram of a through-wall pipe head and a connection nozzle in some embodiments.

### Reference list

- 100: battery pack
- 110: direct cooling plate
- 120: housing
- 121: frame
- 130: placement cavity
- 131: battery compartment
- 1311: sub-compartment
- 132: electrical compartment
- 140: pressure beam
- 150: gasket
- 160: crossbeam
- 170: through-wall pipe head
- 180: connection nozzle
- 181: liquid inlet hole
- 182: liquid outlet hole
- 190: sealing member
- 210: temperature sensor
- 220: heating film
- 230: flow regulating valve
- 240: controller
- 300: battery module
- 310: cell
- 400: liquid cooling flow channel
- 410: liquid inlet
- 420: liquid outlet
- 430: liquid inlet pipe
- 431: branch pipe group
- 4311: first main pipe
- 4312: first branch pipe
- 440: liquid outlet pipe
- 441: second main pipe
- 442: second branch pipe

### DETAILED DESCRIPTION

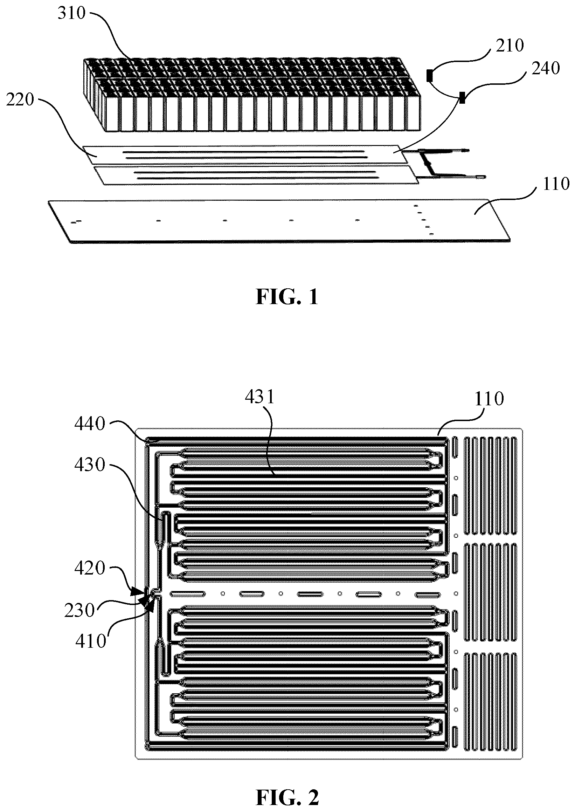

As shown in FIGS. 1 to 4, the battery thermal management system structure of this embodiment includes a direct cooling plate 110 and a temperature control assembly. A top surface of the direct cooling plate 110 is connected to bottom surfaces of cells 310, a liquid cooling flow channel 400 is disposed in the direct cooling plate 110, a liquid inlet 410 and a liquid outlet 420 that are connected to the liquid cooling flow channel 400 are disposed on the direct cooling plate 110, and the liquid inlet 410 and the liquid outlet 420 are disposed on the same side of the direct cooling plate 110. The temperature control assembly includes a controller 240, a temperature sensor 210, a flow regulating valve 230 and a heating film 220. The controller 240 is separately connected to the temperature sensor 210, the flow regulating valve 230 and the heating film 220 via signals, the temperature sensor 210 is disposed on one side of the cells 310, the flow regulating valve 230 is disposed at the liquid inlet 410, the flow regulating valve 230 is connected to the liquid cooling flow channel 400, and the heating film 220 is disposed between the direct cooling plate 110 and the cells 310. A structure and principle of the flow regulating valve 230 are the same as those of a commonly used flow regulating valve.

In this embodiment, the top surface of the direct cooling plate 110 is connected to the bottom surfaces of the cells 310, and a coolant circularly flows in the liquid cooling flow channel 400 via the liquid inlet 410 and the liquid outlet 420 so that the direct cooling plate 110 can quickly cool the cells 310, thereby effectively reducing a heating degree of the cells 310 during operation and avoiding the performance degradation and even the problem of safety caused by the overheating of the cells 310. Optionally, the temperature control assembly is further disposed. The temperature sensor 210 is disposed on one side of the cells 310 to detect a temperature of a vicinity of the cells 310 in real time and feeds a corresponding temperature signal back to the controller 240, and the controller 240 controls the flow regulating valve 230 to control a flow rate of the coolant or starts the heating film 220 for heating, thereby accurately controlling the temperature of the vicinity of the cells 310 to be maintained within a suitable operation range, ensuring the operation performance of the cells 310 and improving the service lives of the cells 310. Optionally, disposing the liquid inlet 410 and the liquid outlet 420 on the same side of the direct cooling plate 110 is conducive to achieving temperature neutralization during the entry and exit of the coolant, thereby preventing an excessively large temperature difference between cells near the liquid inlet 410 and cells near the liquid outlet 420 from affecting the operation performance of the cells 310.

As shown in the figure, in some embodiments, the liquid cooling flow channel 400 includes a liquid inlet pipe 430 and a liquid outlet pipe 440, and the liquid inlet pipe 430 is connected to the liquid inlet 410 and includes multiple branch pipe groups 431 uniformly connected in parallel and disposed directly below the cells 310 to achieve the uniform cooling of the cells 310 and avoid a relatively large temperature difference between the cells 310, which is conducive to ensuring the operation performance of the cells 310. In addition, a first end of the liquid outlet pipe 440 is connected to an end of each of the multiple branch pipe groups 431 facing away from the liquid inlet 410, and a second end of the liquid outlet pipe 440 is connected to the liquid outlet 420. The coolant enters the liquid inlet pipe 430 from the liquid inlet 410, exchanges heat with the cells 310 to achieve the cooling of the cells 310, flows all the way to an end facing away from the liquid inlet 410, enters the liquid outlet pipe 440 and flows back along an opposite direction to the liquid outlet 420 near a side of the liquid inlet 410 via the liquid outlet pipe 440 for discharge, which is conducive to achieving temperature neutralization between the liquid inlet pipe 430 and the liquid outlet pipe 440 and reducing a temperature difference of the direct cooling plate 110. Moreover, the uniform cooling of the cells 310 can be achieved, and the temperature difference between the cells 310 can be reduced, which is conducive to ensuring the operation performance of the cells 310.

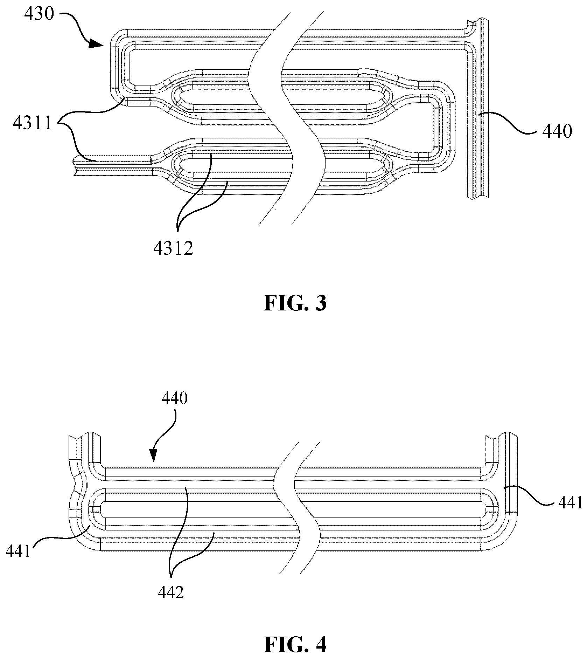

As shown in FIG. 3, in some embodiments, the branch pipe group 431 includes multiple liquid distribution pipes that are bent and connected to each other, the liquid distribution pipes include a first main pipe 4311 and multiple first branch pipes 4312, the multiple first branch pipes 4312 are connected in parallel to each other, and two ends of each of the multiple first branch pipes 4312 are connected to the first main pipe 4311, thereby improving the uniformity of the flow and distribution of the coolant and improving the uniformity of the overall cooling. Moreover, a design of multiple liquid cooling flow channels 400 distributed in a staggered manner can effectively achieve the temperature neutralization, reduce the temperature difference between the entire cells 310, maintain the temperature uniformity of the cells 310 and ensure the operation performance of the cells 310.

As shown in FIG. 4, in some embodiments, the liquid outlet pipe 440 includes a second main pipe 441 and multiple second branch pipes 442. The multiple second branch pipes 442 are connected in parallel to each other, and two ends of each of the multiple second branch pipes 442 are connected to the second main pipe 441. After the coolant exchanges heat with the cells 310 in the liquid inlet pipe 430 to achieve the cooling of the cells 310, a temperature of the coolant increases. Disposing the multiple second branch pipes 442 in the liquid outlet pipe 440 to achieve the diversion and reflux of the coolant is conducive to preventing the coolant at a relatively high temperature from excessive concentration and causing an excessively high operating temperature of cells 310 near the liquid outlet pipe 440 and is conducive to maintaining the temperature uniformity of the entire cells 310 and ensuring the operation performance of the cells 310.

In some embodiments, the liquid inlet pipe 430 is disposed on an inner side of the direct cooling plate 110, and the liquid outlet pipe 440 is disposed on an outer side of the direct cooling plate 110 so that after entering the liquid inlet pipe 430 from the liquid inlet 410, the coolant can quickly cool the cells 310 located on the inner side of the direct cooling plate 110, and after completing heat exchange, the coolant can be discharged from the liquid outlet pipe 440 on the outer side of the direct cooling plate 110. In this manner, the coolant can be fully used, and the use efficiency of the coolant can be improved.

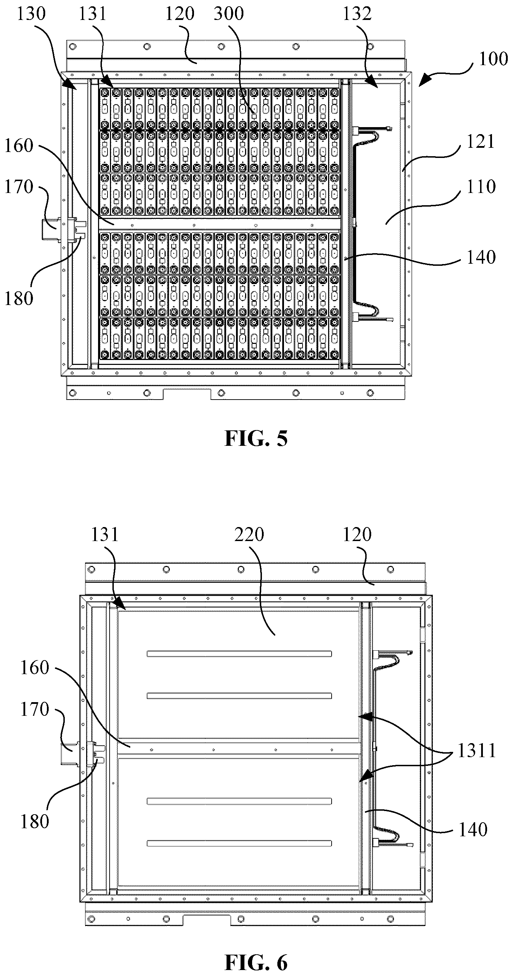

On the other hand, as shown in FIGS. 5 to 10, a battery pack is provided. The battery pack 100 includes the above battery thermal management system structure and further includes a housing 120 and a battery module 300, the battery module 300 includes multiple cells 310 disposed side by side, and the direct cooling plate 110 is integrally formed with the housing 120, which is conducive to improving the same overall strength and ensuring the stability of the entire structure of the battery pack 100. The housing 120 includes a frame 121 connected to the direct cooling plate 110, and the frame 121 and the direct cooling plate 110 enclose to form a placement cavity 130. A pressure beam 140 is disposed in the placement cavity 130 and divides the placement cavity 130 into a battery compartment 131 configured for placing the battery module 300 and an electrical compartment 132 configured for placing an electronic element, thereby avoiding a mutual effect between the battery module 300 and the electronic element.

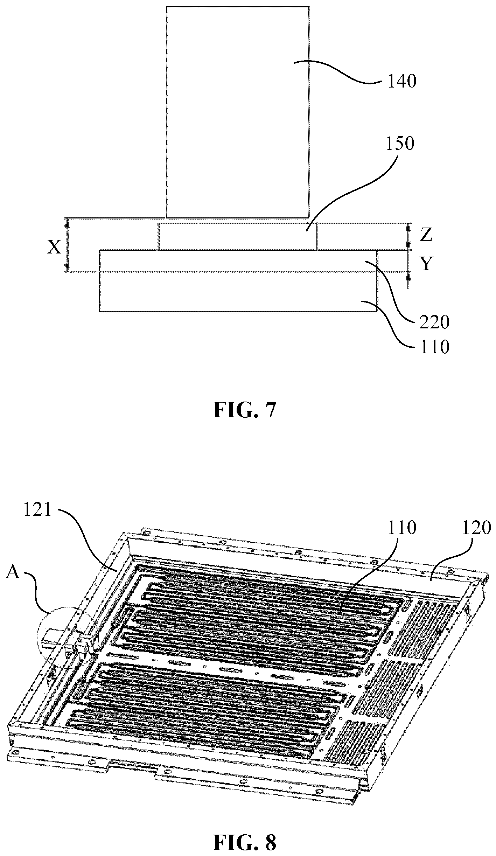

In some embodiments, as shown in FIGS. 6 and 7, the heating film 220 is disposed in the battery compartment 131, and one end of the heating film 220 penetrates the pressure beam 140, reaches an inside of the electrical compartment 132 and is connected to the electronic element. The electronic element performs operations such as power supply and driving on the heating film 220. A gasket 150 is disposed between the pressure beam 140 and the heating film 220. Disposing the gasket 150 can effectively prevent the pressure beam 140 from squeezing the heating film 220 due to reasons such as the flatness or the expansion of the cells 310 and causing damage to the heating film 220.

In some embodiments, spacing between a bottom of the pressure beam 140 and the direct cooling plate 110 is set to X, a thickness of the heating film 220 is set to Y, and a thickness of the gasket 150 is set to Z, where X > Y + 1 mm, and Y + 0.4 mm ≤ Z ≤ X - 0.4 mm to form a benign relationship among the spacing between the bottom of the pressure beam 140 and the direct cooling plate 110, the thickness of the heating film 220 and the thickness of the gasket 150, thereby ensuring that the pressure beam 140 effectively separates the battery compartment 131 and the electrical compartment 132, reducing the squeezing and impact of the pressure beam 140 on the heating film 220, ensuring that the gasket 150 has a corresponding protective effect and further ensuring the normal operation of the entire battery pack 100.

In some embodiments, at least one crossbeam 160 is disposed in the battery compartment 131 and divides the battery compartment 131 into at least two sub-compartments 1311. Battery modules 300 are placed in corresponding sub-compartments 1311, respectively, thereby reducing a mutual effect between the battery modules 300 and facilitating the thermal management of the battery modules 300. One heating film 220 is disposed in each sub-compartment 1311, and multiple heating films 220 are connected in series to each other to achieve the synchronous heating of the battery modules 300 in different sub-compartments 1311, thereby ensuring the overall temperature difference of the battery pack 100, ensuring that operating temperature differences between the battery modules 300 in multiple sub-compartments 1311 are maintained as consistent as possible and ensuring the operation performance of the battery modules 300.

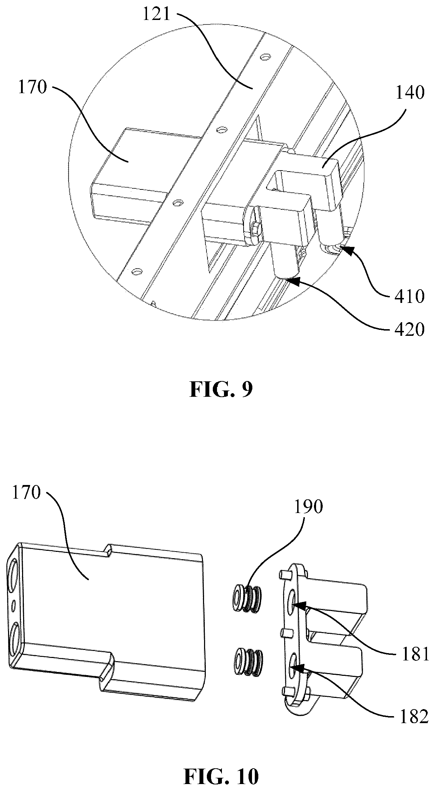

In some embodiments, as shown in FIGS. 8 and 9, a through-wall pipe head 170 is further disposed on the housing 120 and penetrates the frame 121, an end of the through-wall pipe head 170 located on an outer side of the placement cavity 130 is configured to be connected to an external coolant device, and an end of the through-wall pipe head 170 located in the placement cavity 130 is separately connected to the liquid inlet 410 and the liquid outlet 420 via a connection nozzle 180. The flow regulating valve 230 may be disposed between the through-wall pipe head 170 and the external coolant device and configured to adjust a flow rate of the coolant input by the external coolant device and adjust a cooling rate of the coolant to achieve an effect of adjusting the operating temperature of the cells 310 in the placement cavity 130.

In some embodiments, as shown in FIG. 10, a liquid inlet hole 181 connected to the liquid inlet 410 and a liquid outlet hole 182 connected to the liquid outlet 420 are disposed on a side of the connection nozzle 180 connected to the through-wall pipe head 170, and sealing members 190 are disposed in the liquid inlet hole 181 and the liquid outlet hole 182 to achieve sealing and waterproofing. In a practical operation, an O-shaped sealing ring structure is used in the sealing member 190 to effectively achieve sealing and waterproof effects.

## Claims

1. A battery thermal management system structure, comprising:
a direct cooling plate (110), wherein a top surface of the direct cooling plate (110) is configured to be connected to bottom surfaces of cells (310), a liquid cooling flow channel (400) is disposed in the direct cooling plate (110), a liquid inlet (410) and a liquid outlet (420) are connected to the liquid cooling flow channel (400), and the liquid inlet (410) and the liquid outlet (420) are disposed on the direct cooling plate (110) and disposed on a same side of the direct cooling plate (110); and
a temperature control assembly comprising a controller (240), a temperature sensor (210), a flow regulating valve (230) and a heating film (220), wherein the controller (240) is separately connected to the temperature sensor (210), the flow regulating valve (230) and the heating film (220) via signals, the temperature sensor (210) is configured to be disposed on one side of the cells (310), the flow regulating valve (230) is disposed at the liquid inlet (410), the flow regulating valve (230) is connected to the liquid cooling flow channel (400), and the heating film (220) is configured to be disposed between the direct cooling plate (110) and the cells (310).

2. The battery thermal management system structure according to claim 1, wherein the liquid cooling flow channel (400) comprises a liquid inlet pipe (430) and a liquid outlet pipe (440), the liquid inlet pipe (430) is connected to the liquid inlet (410) and comprises a plurality of branch pipe groups (431) uniformly connected in parallel and configured to be disposed directly below the cells (310), a first end of the liquid outlet pipe (440) is connected to an end of each of the plurality of branch pipe groups (431) facing away from the liquid inlet (410), and a second end of the liquid outlet pipe (440) is connected to the liquid outlet (420).

3. The battery thermal management system structure according to claim 2, wherein each of the plurality of branch pipe groups (431) comprises a plurality of liquid distribution pipes that are bent and connected to each other, the plurality of liquid distribution pipes comprise a first main pipe (4311) and a plurality of first branch pipes (4312), the plurality of first branch pipes (4312) are connected in parallel to each other, and two ends of each of the plurality of first branch pipes (4312) are connected to the first main pipe (4311).

4. The battery thermal management system structure according to claim 2, wherein the liquid outlet pipe (440) comprises a second main pipe (441) and a plurality of second branch pipes (442), the plurality of second branch pipes (442) are connected in parallel to each other, and two ends of each of the plurality of second branch pipes (442) are connected to the second main pipe (441).

5. The battery thermal management system structure according to any one of claims 2 to 4, wherein the liquid inlet pipe (430) is disposed on an inner side of the direct cooling plate (110), and the liquid outlet pipe (440) is disposed on an outer side of the direct cooling plate (110).

6. A battery pack, comprising: the battery thermal management system structure according to any one of claims 1 to 5, and further comprising a housing (120) and a battery module (300), wherein the battery module (300) comprises a plurality of cells (310) disposed side by side, the direct cooling plate (110) is integrally formed with the housing (120), the housing (120) comprises a frame (121) connected to the direct cooling plate (110), the frame (121) and the direct cooling plate (110) enclose to form a placement cavity (130), a pressure beam (140) is disposed in the placement cavity (130) and divides the placement cavity (130) into a battery compartment (131) configured for placing the battery module (300) and an electrical compartment (132) configured for placing an electronic element.

7. The battery pack according to claim 6, wherein the heating film (220) is disposed in the battery compartment (131), one end of the heating film (220) penetrates the pressure beam (140), reaches an inside of the electrical compartment (132) and is connected to the electronic element, and a gasket (150) is disposed between the pressure beam (140) and the heating film (220).

8. The battery pack according to claim 7, wherein spacing between a bottom of the pressure beam (140) and the direct cooling plate (110) is set to X, a thickness of the heating film (220) is set to Y, and a thickness of the gasket (150) is set to Z, wherein X > Y + 1 mm, and Y + 0.4 mm ≤ Z ≤ X - 0.4 mm.

9. The battery pack according to claim 6, wherein at least one crossbeam (160) is disposed in the battery compartment (131) and divides the battery compartment (131) into at least two sub-compartments (1311), one heating film (220) is disposed in each of the at least two sub-compartments (1311), and a plurality of heating films (220) are connected in series to each other.

10. The battery pack according to any one of claims 6 to 9, wherein a through-wall pipe head (170) is further disposed on the housing (120) and penetrates the frame (121), an end of the through-wall pipe head (170) located on an outer side of the placement cavity (130) is configured to be connected to an external coolant device, and an end of the through-wall pipe head (170) located in the placement cavity (130) is separately connected to the liquid inlet (410) and the liquid outlet (420) via a connection nozzle (180).
